# EUROPÄISCHE PATENTSCHRIFT

(11) **EP 2 965 905 B1**
(45) Veröffentlichungstag und Bekanntmachung des Hinweises auf die Patenterteilung: **07.04.2021**
(21) Anmeldenummer: 15163035.7
(22) Anmeldetag: 09.04.2015
(51) Int. Cl.: B32B 27/08, A47B 95/04, A47B 96/20, B32B 27/30, B32B 27/32, B32B 27/34, B32B 27/36, B32B 37/12, B29C 63/00, C09J 5/06, C09J 11/00

(54) **KANTENLEISTE**
EDGE STRIP
BAGUETTE DE BORDURE

(30) Priorität: 11.07.2014 DE 102014109750
(43) Veröffentlichungstag der Anmeldung: 13.01.2016
(73) Patentinhaber: SURTECO GmbH, 86647 Buttenwiesen (DE)
(72) Erfinder: Ottow, Martin, 45134 Essen (DE); Petrakis, Jordanis, 42277 Wuppertal (DE); Rohde, Domingo, 24111 Kiel (DE); Schunck, Stephan, 48151 Münster (DE)
(74) Vertreter: von dem Borne, Andreas

(56) Entgegenhaltungen:
- EP-A1- 2 374 587
- EP-A2- 2 653 513
- WO-A1-2009/026977
- DE-A1-102011 104 980
- DE-A1-102013 022 086
- DE-A1-102013 106 210
- DE-U1-202015 104 158

## Beschreibung

Die Erfindung betrifft die Verwendung einer Kantenleiste, welche für die Schmalflächenbeschichtung von plattenförmigen Werkstücken, insbesondere von Möbelplatten, bestimmt ist und zumindest eine (frontseitige) Grundschicht und eine (rückseitige) Schmelzschicht zum Befestigen der Kantenleiste an dem Werkstück aufweist. Solche Kantenleisten bzw. Deckleisten werden auch einfach als Kanten oder Kantenbänder oder auch als Umleimer bezeichnet. Bei den plattenförmigen Werkstücken bzw. Möbelplatten kann es sich insbesondere um Holzwerkstoffplatten, z. B. Spanplatten, Faserplatten oder dergleichen handeln. Es werden aber auch Platten aus anderen Werkstoffen sowie Verbundplatten umfasst. Die Grundschicht wird auch als Deckschicht bezeichnet, denn es handelt sich um die im montierten Zustand sichtbare und folglich frontseitige Schicht der Kantenleiste. Auf der Rückseite dieser Grundschicht ist die Schmelzschicht angeordnet, mit welcher die Kante im Zuge der Montage (adhäsiv) an dem Werkstück befestigt wird. Die Kantenleiste kann jedoch auch weitere Schichten umfassen.

Es ist grundsätzlich bekannt, zur Befestigung von Kantenleisten auf Schmalflächen von Möbelplatten einen Schmelzklebstoff im Zuge der Befestigung bzw. unmittelbar vor der Befestigung der Deckleiste aufzutragen. Die Befestigung erfolgt in sogenannten Kantenbandanleimmaschinen. Bei einer solchen Befestigung der Deckleiste auf den Schmalseiten von Möbelplatten besteht ein Problem darin, dass eine sichtbare Fuge zwischen den Deckleisten und den Möbelplatten bzw. ihren Schmalseiten entstehen kann. Diese Fuge resultiert im Wesentlichen aus der Schmelzklebstoffschicht. Hinzu kommt regelmäßig eine Haftvermittlerschicht, welche eingesetzt wird, um die Deckleisten aus thermoplastischem Kunststoff auf den Schmalseiten von Möbelplatten zu befestigen.

Zur Vermeidung solcher unansehnlichen Schmelzklebstofffugen, welche insbesondere bei Benutzung bzw. Reinigung deutlich sichtbar werden, wurde bereits vorgeschlagen, vollständig auf eine Schmelzklebstoffschicht zu verzichten. Aus der EP 1 163 864 A1 ist daher eine klebstofffreie Verbindung zwischen einer Deckleiste bzw. Kunststoffkante und einer Möbelplatte bekannt, d. h. die Kunststoffkante wird unmittelbar und ohne Kleber auf die Möbelplatte gefügt. Dazu wird die Oberfläche der Kunststoffkante aufgeschmolzen, z. B. durch Laserstrahlung oder auch durch Heißluft.

Alternativ wird in der EP 1 852 242 A1 vorgeschlagen, eine Deckleiste mit einer einseitig auf die Deckleiste aufgebrachten Schmelzklebstoffschicht zu verwenden, wobei die Deckleiste mit der Schmelzklebstoffschicht im Wege der Coextrusion hergestellt ist. Dabei ist die Schmelzklebstoffschicht bevorzugt in der Farbe der Deckleiste eingefärbt, so dass sich die Deckleiste an einer Möbelplatte befestigen lässt, ohne dass eine sichtbare Klebstofffuge erkennbar ist. Der Schmelzklebstoff bzw. die Schmelzklebstoffschicht ist dabei mittels Laserstrahlung aufschmelzbar bzw. aktivierbar.

In der WO 2009/026977 A1 wird eine Kantenleiste für Möbelstücke beschrieben, die eine Schmelzschicht umfasst. Diese Schmelzschicht soll sowohl polare als auch unpolare Anteile im Molekülaufbau enthalten. Zur Verarbeitung wird die Schmelzschicht durch Beaufschlagung mit Energie erwärmt. Die Energie kann z. B. in Form von Laserlicht, Heißluft, Mikrowellen, Ultraschall etc. zugeführt werden, wobei ein vorzugsweise in der Schmelzschicht enthaltenes Energieabsorptionsmittel (z. B. Laserpigmente) die durch das Energiebeaufschlagungsmittel zugeführte Energie aufnimmt und die Schmelzschicht über den Schmelzpunkt erwärmt.

Die EP 2 653 513 A2 beschreibt ein Verfahren zur Anbringung einer Kantenleiste sowie die auf diese Weise erhaltenen Produkte und deren Verwendung. Dabei wird die Kantenleiste auf ihrer mit dem Werkstoff zu verbindenden Seite mittels einer mittels Laserstrahlung aktivierbaren Klebstoffschicht beaufschlagt bzw. versehen, wobei die Klebstoffschicht ausgehend von einer Dispersion oder Lösung mindestens eines Klebstoffpolymers erhalten wird.

In der DE 10 2011 104 980 A1 wird eine Kantenleiste beschrieben, deren Schmelzschicht für eine optimale Absorption von Laserstrahlung und Umwandlung der Laserstrahlung in Wärmeenergie bzw. Absorption von zugeführter Plasmaenergie absorbierende Zusatzstoffe und/oder Pigmente enthält.

Aus der DE 10 2013 106 2010 A1 kennt man ein Herstellungsverfahren eines Verkleidungselementes, das eine Holzmaterialschicht umfasst, die einem Flexibilisierungsvorgang unterzogen wird.

Eine Kantenleiste für Möbelplatten ist außerdem aus der DE 10 2013 022 086 A1 bekannt. Die Schmelzschicht umfasst ein thermoplastisches Polyolefin. Für eine optimale Absorption von Laserstrahlung oder Plasmaenergie sollen Zusatzstoffe vorgesehen sein.

Die DE 20 2015 104 158 U1 beschreibt eine Kantenleiste für die Beschichtung profilierter Schmalflächen, wobei in der Kantenleiste rückseitig eine oder mehrere sich in Längsrichtung erstreckende Nuten unter Bildung dickenreduzierter Bereiche angeordnet sind, welche im Zuge der Montage der Kantenleiste an dem Werkstück eine oder mehrere Knickstellen bilden. Zum Aufschmelzen der rückseitigen Schmelzschicht kann auf Laserstrahlung, Plasmastrahlung, Heißluft, Infrarotstrahlung, Mikrowellenstrahlung oder dergleichen zurückgegriffen werden.

Schließlich behandelt die EP 2 374 587 A1 ein Verfahren zum Herstellen von Beschichtungsmaterial für Werkstücke. Dabei wird ein bahnförmiges oder streifenförmiges Basismaterial zur Verfügung gestellt und auf dieses wird eine Funktionsschicht aufgebracht. Funktionsschicht soll sich mit einer Energiequelle aufschmelzen lassen, ausgewählt aus der Gruppe bestehend aus Laser, Heißluftquelle, Infrarotquelle, Ultraschallquelle, Magnetfeldquelle, Mikrowellenquelle, Plasmaquelle und Begasungsquelle.

Es besteht insgesamt das Bedürfnis, Kantenleisten für die Schmalflächenbeschichtung von plattenförmigen Werkstücken, insbesondere von Möbelplatten zur Verfügung zu stellen, welche mit einer Schmelzschicht bzw. Funktionalschicht versehen sind, die mittels geeigneter Quellen, z. B. mittels Laserstrahlung oder auch Plasmastrahlung aufgeschmolzen und mittels Andruck dauerhaft auf die Möbelplatte aufgebracht werden kann. Erste Ausführungsformen haben sich in der Praxis im Zusammenhang mit der Anwendung von Laserstrahlung oder auch Heißluft etabliert. Sofern die Schmelzschicht mittels Laserstrahlung aufgeschmolzen wird, ist eine solche Funktionalschicht gegebenenfalls mit laserabsorbierenden Additiven versehen. Ein Nachteil solcher Funktionalschichten mit laserabsorbierenden Additiven ist die farbabhängige Aktivierung der laserabsorbierenden Schmelzschicht. Dieser Nachteil muss durch eine farbabhängige Formulierung der Funktionalschicht sowie durch farbabhängige Laserleistungen kompensiert werden. Nachteilig ist bei dem Einsatz von Laserstrahlung auch die Tatsache, dass durch die Laseraktivierung gegebenenfalls auch die Grundschicht und folglich die eigentliche Profilleiste zumindest teilweise erwärmt wird. Dieses kann zu einer negativen Beeinflussung der Geometrie führen. Es besteht daher das Bedürfnis nach alternativen Konzepten. - Hier setzt die Erfindung ein.

Der Erfindung liegt die Aufgabe zugrunde, eine Verwendung einer Kantenleiste für die Schmalflächenbeschichtung von plattenförmigen Werkstücken, insbesondere von Möbelplatten, der eingangs beschriebenen Art anzugeben, bei welcher sich die Schmelzschicht gezielt selektiv aufschmelzen lässt.

Zur Lösung dieser Aufgabe lehrt die Erfindung die Verwendung einer Kantenleiste für eine Aktivierung der Schmelzschicht mit Mikrowellenstrahlung gemäß Patentanspruch 1. Es ist vorgesehen, dass die Schmelzschicht einen dielektrischen Verlustfaktor ε_{SS} für Mikrowellenstrahlung aufweist, welche höher ist als der dielektrische Verlustfaktor ε_{GS} der Grundschicht.

Mikrowellenstrahlung meint im Rahmen der Erfindung elektromagnetische Strahlung mit einer Frequenz von 300 MHz bis 300 GHz, wobei erfindungsgemäß Mikrowellenstrahlung mit einer Frequenz von 902 MHz bis 928 MHz oder von 2,4 GHz bis 2,5 GHz oder von 5,7 GHz bis 5,9 GHz verwendet wird. Die Erfindung geht dabei zunächst einmal von der Erkenntnis aus, dass für die Verarbeitung von Kantenleisten auch Mikrowellenstrahlung zum Aufschmelzen einer Schmelzschicht in Betracht kommt. Erfindungsgemäß wird eine Kantenleiste mit zumindest zwei Schichten, nämlich der (frontseitigen) Grundschicht bzw. Deckschicht und der (rückseitigen) Schmelzschicht verwendet. Die Grundschicht bzw. Deckschicht bildet nach der Montage die Sichtseite der Kantenleiste. In der Regel ist die Schmelzschicht deutlich dünner als die Deckschicht, so dass die Deckschicht selbst im Wesentlichen die Kantenleiste bildet, während die Schmelzschicht, die auch als Funktionalschicht bezeichnet wird, im Wesentlichen der Verklebung der Leiste an dem Werkstück dient. Die erfindungsgemäße Ausgestaltung ermöglicht nun eine selektive Aktivierung der Funktionalschicht mittels Mikrowellenstrahlung, denn die Schmelzschicht lässt sich durch ihre Ausgestaltung mit hohem dielektrischen Verlustfaktor und folglich durch hohe dielektrische Verluste im Mikrowellenbereich erwärmen und damit aufschmelzen, während die Grundschicht der Kantenleiste so ausgestaltet ist, dass sie sich durch lediglich geringe dielektrische Verluste nicht oder nur geringfügig erwärmt. Die Umwandlung elektrischer Energie in Wärme erfolgt demnach durch dielektrische Verluste und folglich durch Wechselwirkung polarer Gruppen von Molekülen nichtleitender Stoffe mit dem elektrischen Wechselfeld der elektromagnetischen Schwingung. Ein Maß für dieses dielektrische Verhalten ist die Dielektrizitätskonstante, bei der es sich um eine frequenzabhängige, komplexe Größe ε = ε' - i ε" handelt. Im Rahmen der vorliegenden Erfindung wird der Imaginärteil ε" dieser Dielektrizitätskonstante als Verlustfaktor ε bezeichnet. Erfindungsgemäß lässt sich die Schmelzschicht aufgrund des hohen dielektrischen Verlustfaktors ε_{SS} auf einfache Weise mit Mikrowellenstrahlung erwärmen, während die Grundschicht aufgrund des geringen Verlustfaktors ε_{SS} nicht oder nur unwesentlich erwärmt wird. Das Verhältnis R zwischen dem dielektrischen Verlustfaktor ε_{SS} der Schmelzschicht einerseits und dem dielektrischen Verlustfaktor ε_{GS} der Grundschicht andererseits ist folglich erfindungsgemäß größer als 1 (R = ε_{SS} / ε_{GS} > 1). Dabei ist vorgesehen, dass dieses Verhältnis R deutlich größer als 1 ist. Denn es gilt R > 5, besonders bevorzugt R > 10.

Die angegebenen Verlustfaktoren bzw. deren Verhältnisse beziehen sich erfindungsgemäß auf Mikrowellenstrahlung in einem Frequenzbereich von 902 MHz bis 928 MHz, z. B. 905 MHz, oder einen Frequenzbereich von 2,4 GHz bis 2,5 GHz, z. B. 2,45 GHz, oder ein Frequenzbereich von 5,7 GHz bis 5,9 GHz, z. B. 5,8 GHz.

Die Schmelzschicht ist erfindungsgemäß aus thermoplastischem Kunststoff bzw. auf Basis eines thermoplastischen Kunststoffs gefertigt. Der Verlustfaktor ε_{SS} der Schmelzschicht hat bevorzugt einen Wert von größer als 0,5, z. B. größer als 1. Außerdem liegt es im Rahmen der Erfindung, dass der Verlustfaktor ε_{SS} der Schmelzschicht einen Wert von weniger als 50 aufweist. So liegt der Verlustfaktor bevorzugt in einem Bereich von 0,5 bis 20, besonders bevorzugt 1 bis 15, z. B. 1 bis 10. Dabei ist der Verlustfaktor der Schmelzschicht bei Raumtemperatur (ca. 20 °C) gemeint.

Die Grundschicht besteht bevorzugt aus zumindest einem thermoplastischen Polymer. Alternativ kommen für die Grundschicht jedoch auch andere Materialien, z. B. Holz- und/oder Papierwerkstoffe in Frage. So können z. B. auch papierbasierte Melaminkanten oder Holzfurnierkanten als Grundschicht verwendet werden. Bevorzugt werden jedoch thermoplastische Kunststoffe und folglich thermoplastische Kunststoff-Kanten eingesetzt. Besonders bevorzugt besteht die Grundschicht aus einem thermoplastischen Polymer aus der Gruppe der Polystyrole (z. B. ABS), Polyvinylchloride (z. B. PVC-U), Polyolefine (z. B. PP oder PE), Polycarbonate (PC) oder Polymethylmethacrylate (PMMA) sowie Polyamide (PA). Die Grundschicht kann dabei optional mit Füllstoffen mineralischer Art verstärkt sein, z. B. Calciumcarbonat, Silikate aus der Gruppe der Magnesium-Aluminium-Silikate, wie z. B. Talkum, Kaolin, Wollastonit oder mit Glimmer.

Die Schmelzschicht und folglich die mittels Mikrowellen aktivierbare Schicht besteht bevorzugt aus zumindest einem thermoplastischen Polymer aus der Gruppe der Polystyrole (z. B. ABS), Polyvinylchloride (z. B. PVC-U), Polyolefine (z. B. PP oder PE), Polyamide (PA), thermoplastische Elastomere auf Polyolefinbasis oder Styrolblockcopolymere, thermoplastische Copylester, Copolyamide oder Polymethylmethacrylate. Alternativ sind auch Vinylacetat-Ehtylencopolymere oder Methacrylat-Ethylencopolymere möglich. Bevorzugt kann für die Schmelzschicht ein thermoplastisches Polymer auf Basis von thermoplastischem Polyurethan (TPU) oder ein ataktisches Polyalphaolefin (APAO) verwendet werden.

Grundsätzlich empfiehlt es sich, thermoplastische Polymere einzusetzen, die sich aufgrund dielektrischer Verluste in geeignetem Umfang mit Mikrowellen erwärmen lassen. Besonders bevorzugt ist die Schmelzschicht mit einem oder mehreren Additiven für die Erhöhung des dielektrischen Verlustfaktors versehen.

Als Additive können Additive aus der Gruppe der paramagnetischen Metalle oder Materialien oder ferrimagnetischen Metalle oder Materialien verwendet werden. Dabei kann es sich z. B. um Spinelle, Granate oder Ferrite handeln. Alternativ kommt Kohlenstoff in verschiedenen Modifikationen in Frage.

Außerdem können als Additive elektrisch leitfähige Partikel (z. B. Ruß) oder Partikel mit elektrisch leitfähiger Beschichtung zum Einsatz kommen. Bei den Partikeln mit elektrisch leitfähiger Beschichtung kann es sich z. B. um mineralische Partikel, z. B. Silikate oder Schichtsilikate (z. B. Glimmer oder dergleichen) mit elektrisch leitfähiger Beschichtung handeln. Für die elektrisch leitfähige Beschichtung solcher mineralischer Partikel können z. B. (optisch transparente) elektrisch leitfähige Oxide verwendet werden, z. B. Antimon-ZinnOxid. Dabei handelt es sich bevorzugt um Antimon(Sb) dotiertes Zinnoxid, z. B. Zinn(IV)-oxid (SnO₂) oder Zinn(II, IV)-oxid (Sn₂O₃) oder alternativ auch Zinn(II)-oxid (SnO). Solche transparenten bzw. farbneutralen Additive, die aus Glimmer-Partikeln, beschichtet mit Antimon dotiertem Zinnoxid bestehen, werden z. B. von der Firma Merck unter der Produktbezeichnung Iriotec (vormals Minatec) vertrieben. Besonders bevorzugt kann dabei z. B. ein Additiv mit der Bezeichnung Iriotec 7315 bzw. Minatec 51 zum Einsatz kommen. Solche "leitfähigen Pigmente" sind im Handel folglich verfügbar und sie werden bislang z. B. für die Herstellung antistatischer Fußböden oder für die Herstellung von leitfähigen Primern verwendet. Erfindungsgemäß werden sie als Additiv zur Erhöhung der dielektrischen Verluste der Kunststoff-Schmelzschicht verwendet.

Der Anteil der Additive (z. B. der elektrisch leitfähigen Additive) in der Schmelzschicht kann in einem Bereich von 2 % bis 15 %, bevorzugt 5 % bis 10%, jeweils bezogen auf das Gewicht, liegen. Dabei kommen z.B. pulverförmige Additive mit einer Korngröße von 1 µm bis 100 µm, bevorzugt 10 µm bis 60 µm zum Einsatz.

Der Einsatz von Additiven zur Erhöhung der dielektrischen Verluste ist nur dann zweckmäßig, wenn die Schmelzschicht aus thermoplastischem Kunststoff gefertigt wird, welcher selbst einen niedrigen dielektrischen Verlust aufweist. So kommen erfindungsgemäß die Additive z. B. bei Schmelzschichten auf Polyolefin-Basis oder TPU-Basis zum Einsatz.

Gemeinsame physikalische Eigenschaft dieser Stoffe sind die hohen dielektrischen Verluste ε (d. h. ε"_{eff}). Die genannten Additive können - wie beschrieben - im Zuge der Herstellung (unmittelbar) der Schmelzschicht bzw. dem Material der Schmelzschicht zugefügt werden. Alternativ besteht die Möglichkeit, solche Additive z. B. in einem Lösemittel als separate Schicht vorzusehen. Die separate Schicht mit Additiven kann auf die Schmelzschicht, d. h. auf die der Grundschicht gegenüberliegende Seite der Schmelzschicht aufgebracht werden oder alternativ auch zwischen der Grundschicht bzw. Kante und der Schmelzschicht angeordnet werden.

Die erfindungsgemäße Kantenleiste, die zumindest aus der Grundschicht und der Schmelzschicht besteht, lässt sich z. B. durch Coextrusion oder Post-Coextrusion herstellen. Alternativ kann die Schmelzschicht aber auch durch Nachbeschichtung auf die Grundschicht bzw. Deckschicht aufgebracht werden. Sofern eine zusätzliche Schicht, z. B. die oben beschriebene separate Schicht mit Additiven, vorgesehen ist, kann diese bevorzugt durch ein Beschichtungsverfahren aufgebracht werden.

## Patentansprüche

1. Verwendung einer Kantenleiste, welche für die Schmalflächenbeschichtung von plattenförmigen Werkstücken bestimmt ist und zumindest eine Grundschicht und eine Schmelzschicht zum Befestigen der Kantenleiste an dem Werkstück aufweist,
für eine Aktivierung der Schmelzschicht mit Mikrowellenstrahlung einer Frequenz von 902 MHz bis 928 MHz oder von 2,4 GHz bis 2,5 GHz oder von 5,7 GHz bis 5,9 GHz,
wobei die Schmelzschicht einen dielektrischen Verlustfaktor ε_{SS} für diese Mikrowellenstrahlung aufweist, welcher größer ist als der dielektrische Verlustfaktor ε_{GS} der Grundschicht,
wobei das Verhältnis (R) zwischen dem dielektrischen Verlustfaktor ε_{SS} der Schmelzschicht und dem dielektrischen Verlustfaktor ε_{GS} der Grundschicht bei dieser Mikrowellenstrahlung größer als 5 ist.

2. Verwendung nach Anspruch 1, **dadurch gekennzeichnet, dass** das Verhältnis (R) zwischen dem dielektrischen Verlustfaktor ε_{SS} der Schmelzschicht und dem dielektrischen Verlustfaktor ε_{GS} der Grundschicht größer als 10 ist.

3. Verwendung nach Anspruch 1 oder 2, **dadurch gekennzeichnet, dass** der Verlustfaktor der Schmelzschicht größer als der Verlustfaktor der Grundschicht bei Mikrowellenstrahlung mit einer Frequenz von 905 MHz oder Mikrowellenstrahlung einer Frequenz von 2,45 GHz oder Mikrowellenstrahlung einer Frequenz von. 5,8 GHz ist.

4. Verwendung nach einem der Ansprüche 1 bis 3, **dadurch gekennzeichnet, dass** der dielektrische Verlustfaktor ε_{SS} der Schmelzschicht einen Wert größer als 0,5, vorzugsweise größer als 1 aufweist.

5. Verwendung nach einem der Ansprüche 1 bis 4, **dadurch gekennzeichnet, dass** der dielektrische Verlustfaktor ε_{SS} der Schmelzschicht einen Wert kleiner als 50 aufweist, vorzugsweise kleiner als 10.

6. Verwendung nach einem der Ansprüche 1 bis 5, **dadurch gekennzeichnet, dass** die Grundschicht aus zumindest einem thermoplastischen Polymer, z. B. aus der Gruppe der Polystyrole (z. B. ABS), Polyvinylchloride (z. B. PVC-U), Polyolefine (z. B. PP oder PE), Polycarbonate (PC), Polymethacrylate (PMMA) oder Polyamide (PA) besteht.

7. Verwendung nach einem der Ansprüche 1 bis 6, **dadurch gekennzeichnet, dass** die Schmelzschicht aus zumindest einem thermoplastischen Polymer, z. B. aus der Gruppe der Polystyrole (z. B. ABS), Polyvinylchloride (z. B. PVC-U), Polypropylene (PP), Polyethylene (PE), Polyamide (PA), thermoplastische Elastomere auf Polyolefinbasis oder Styrol-Block-Copolymere, thermoplastische Copyolyester, thermoplastische Copolyamide oder thermoplastische Polymethacrylate, thermoplastische Polyurethane, Vinylacetat-Ethylen-Copolymere, Methacrylat-Ethylen-Copolymere besteht.

8. Verwendung nach einem der Ansprüche 1 bis 7, **dadurch gekennzeichnet, dass** die Schmelzschicht mit Additiven für die Erhöhung des dielektrischen Verlustfaktors versehen ist.

9. Verwendung nach Anspruch 8, **dadurch gekennzeichnet, dass** zumindest ein Additiv aus der Gruppe der paramagnetischen Metalle oder Materialien oder der ferrimagnetischen Metalle oder Materialien, z. B. Spinelle, Granate, Ferrite oder Kohlenstoff verwendet wird.

10. Verwendung nach Anspruch 8 oder 9, **dadurch gekennzeichnet, dass** als Additiv elektrisch leitfähige Partikel, z. B. Ruß oder Metallpartikel, oder Partikel, z. B. mineralische Partikel, mit elektrisch leitfähiger Beschichtung, z. B. einer antimondotierten Zinnoxidschicht verwendet werden.

11. Verwendung nach einem der Ansprüche 1 bis 10, hergestellt durch Coextrusion, Post-Coextrusion oder durch Nachbeschichtung einer Grundschicht mit einer Schmelzschicht.

## Claims

1. A use of an edge strip which is provided for coating the narrow edge surface of panel-type workpieces and which has at least one base layer and a melt layer for attaching the edge strip to the workpiece,
for activating the melt layer with microwave radiation of a frequency of 902 MHz to 928 MHz or of 2.4 GHz to 2.5 GHz or of 5.7 GHz to 5.9 GHz,
wherein the melt layer has a dielectric loss factor ε_{GS} for this microwave radiation which is greater than the dielectric loss factor ε_{GS} of the base layer,
wherein the ratio (R) between the dielectric loss factor ε_{SS} of the melt layer and the dielectric loss factor ε_{GS} of the base layer is greater than 5 at this microwave radiation.

2. The use according to claim 1, **characterized in that** the ratio (R) between the dielectric loss factor ε_{SS} of the melt layer and the dielectric loss factor ε_{GS} of the base layer is greater than 10.

3. The use according to claim 1 or 2, **characterized in that** the loss factor of the melt layer is greater than the loss factor of the base layer at microwave radiation with a frequency of 905 MHz or microwave radiation with a frequency of 2.45 GHz or microwave radiation with a frequency of 5.8 GHz.

4. The use according to any one of claims 1 to 3, **characterized in that** the dielectric loss factor ε_{SS} of the melt layer has a value greater than 0.5, preferably greater than 1.

5. The use according to any one of claims 1 to 4, **characterized in that** the dielectric loss factor ε_{SS} of the melt layer has a value less than 50, preferably less than 10.

6. The use according to any one of claims 1 to 5, **characterized in that** the base layer consists of at least one thermoplastic polymer, e.g. from the group of polystyrenes (e.g. ABS), polyvinyl chlorides (e.g. PVC-U), polyolefins (e.g. PP or PE), polycarbonates (PC), polymethacrylates (PMMA) or polyamides (PA).

7. The use according to any one of claims 1 to 6, **characterized in that** the melt layer consists of at least one thermoplastic polymer, for example from the group of polystyrenes (e.g. ABS), polyvinyl chlorides (e.g. PVC-U), polypropylenes (PP), polyethylenes (PE), polyamides (PA), polyolefin-based thermoplastic elastomers or styrene block copolymers, thermoplastic copolyesters, thermoplastic copolyamides or thermoplastic polymethacrylates, thermoplastic polyurethanes, vinyl acetate ethylene copolymers, methacrylate-ethylene copolymers.

8. The use according to any one of claims 1 to 7, **characterized in that** the melt layer is provided with additives for increasing the dielectric loss factor.

9. The use according to claim 8, **characterized in that** at least one additive from the group of paramagnetic metals or materials or of ferrimagnetic metals or materials, e.g. spinels, garnets, ferrites or carbon, is used.

10. The use according to claim 8 or 9, **characterized in that** electrically conductive particles, e.g. soot, or metal particles, or particles, e.g. mineral particles, with an electrically conductive coating, e.g. an antimony-doped tin oxide layer, are used as additive.

11. The use according to any one of claims 1 to 10, produced by coextrusion, post-coextrusion or by post-coating a base layer with a melt layer.

## Revendications

1. Utilisation d'une baguette de chant qui est destinée au revêtement sur surfaces étroites de pièces en forme de plaques et présente au moins une couche de base et une couche déposée par fusion pour la fixation de la baguette de chant à la pièce,
pour activation de la couche déposée par fusion avec du rayonnement micro-ondes d'une fréquence de 902 MHz à 928 MHz ou de 2,4 GHz à 2,5 GHz ou de 5,7 GHz à 5,9 GHz,
la couche déposée par fusion présentant pour ce rayonnement micro-ondes un facteur de perte diélectrique ε_{SS} qui est supérieur au facteur de perte diélectrique ε_{GS} de la couche de base,
le rapport (R) entre le facteur de perte diélectrique ε_{SS} de la couche déposée par fusion et le facteur de perte diélectrique ε_{GS} de la couche de base étant supérieur à 5 avec ce rayonnement micro-ondes.

2. Utilisation selon la revendication 1, **caractérisée en ce que** le rapport (R) entre le facteur de perte diélectrique ε_{SS} de la couche déposée par fusion et le facteur de perte diélectrique ε_{GS} de la couche de base est supérieur à 10.

3. Utilisation selon la revendication 1 ou 2, **caractérisée en ce que** le facteur de perte de la couche déposée par fusion est supérieur au facteur de perte de la couche de base avec un rayonnement micro-ondes d'une fréquence de 905 MHz ou un rayonnement micro-ondes d'une fréquence de 2,45 GHz ou un rayonnement micro-ondes d'une fréquence de 5,8 GHz.

4. Utilisation selon une des revendications 1 à 3, **caractérisée en ce que** le facteur de perte diélectrique ε_{SS} de la couche déposée par fusion présente une valeur supérieure à 0,5, de préférence supérieure à 1.

5. Utilisation selon une des revendications 1 à 4, **caractérisée en ce que** le facteur de perte diélectrique ε_{SS} de la couche de fusion présente une valeur inférieure à 50, de préférence inférieure à 10.

6. Utilisation selon une des revendications 1 à 5, **caractérisée en ce que** la couche de base est composée d'au moins un polymère thermoplastique, par exemple issu du groupe composé des polystyrènes (par exemple ABS), du chlorure de polyvinyle (par exemple PVC-U), des polyoléfines (par exemple PP ou PE), des polycarbonates (PC), des polymétacrylates (PMMA) ou des polyamides (PA).

7. Utilisation selon une des revendications 1 à 6, **caractérisée en ce que** la couche de base est composée d'au moins un polymère thermoplastique, par exemple issu du groupe composé des polystyrènes (par exemple ABS), du chlorure de polyvinyle (par exemple PVC-U), des polypropylènes (PP), des polyéthylènes (PE), des polyamides (PA), des élastomères thermoplastiques à base de polyoléfine ou des copolymères blocs de styrène, des copyolesters, des copolyamides thermoplastiques ou des polymétacrylates thermoplastiques, des polyuréthanes thermoplastiques, des copolymères de vinyle acétate éthylène, des copolymères de méthacrylate éthylène.

8. Utilisation selon une des revendications 1 à 7, **caractérisée en ce que** la couche déposée par fusion est pourvue d'additifs pour augmenter le facteur de perte diélectrique.

9. Utilisation selon la revendication 8, **caractérisée en ce qu'**au moins un additif du groupe composé des métaux ou matériaux paramagnétiques ou des métaux ou matériaux ferromagnétiques, par exemple du spinelle, du grenat, du ferrite ou du carbone, est utilisé.

10. Utilisation selon la revendication 8 ou 9, **caractérisée en ce qu'**on utilise comme additif des particules conductrices d'électricité, par exemple de la suie ou des particules métalliques, ou des particules, par exemple des particules minérales, comportant un revêtement conducteur d'électricité, par exemple une couche d'oxyde d'étain dotée d'antimoine.

11. Utilisation selon une des revendications 1 à 10, réalisée par coextrusion, post-extrusion ou par revêtement ultérieur d'une couche de base avec une couche déposée par fusion.
